# EUROPEAN PATENT APPLICATION

(11) **EP 3 905 502 A1**
(43) Date of publication of application: **03.11.2021**
(21) Application number: 19904737.4
(22) Date of filing: 09.10.2019
(51) Int. Cl.: H02M 3/335

(54) **FULL-BRIDGE CIRCUIT AND FULL-BRIDGE CONVERTER**

(30) Priority: 29.12.2018 CN 201811648093
(71) Applicant: ZTE Corporation, Shenzhen, Guangdong 518057 (CN)
(72) Inventor: WANG, Linguo, Shenzhen, Guangdong 518057 (CN); ZHU, Junjie, Shenzhen, Guangdong 518057 (CN)
(74) Representative: Pennacchio, Salvatore Giovanni
(86) International application number: PCT/CN2019/110099
(87) International publication number: WO 2020/134313

(57) **Abstract**

Provided in the present disclosure are a full-bridge circuit (10) and a full-bridge converter (100). The full-bridge circuit (10) includes: a primary bridge circuit, a transformer and a secondary rectifier circuit, wherein the primary bridge circuit comprises a first primary bridge circuit and a second primary bridge circuit connected in parallel, and an auxiliary inductor is connected between a lagging arm of the first primary bridge circuit and a lagging arm of the second primary bridge circuit. In the present disclosure, connecting an auxiliary inductor, the current of which is not affected by the size of a load, between two parallel full-bridge circuits can realize soft switching of a lagging arm under a relatively small inductance, and the current commutation speed is accelerated by reducing the magnitude of inductance, so as to solve the problem of duty cycle loss.

## Description

### Technical Field

The present disclosure relates to the field of electronic circuits, and in particular, to a full-bridge circuit and a full-bridge converter.

### Background

Switching power supply is most widely used in the current electronic field due to its advantage in volume brought about by high frequency, as well as characteristics such as high conversion efficiency brought about by operating merely in a switching state. With an increasingly high demand for device power, the requirements on power density and efficiency of switching power supplies also become higher and higher. In conventional switching power supplies, switching loss is a major factor that prevents an attempt of further increasing the switching frequency to reduce the volume. A switching loss is caused by a situation where the switch device endures voltage and current at the same time and there is an energy loss of charging and discharging of a parasitic capacitor during the switching process. Therefore, in the conventional art, phase-shift full-bridge circuit soft switching, for example, zero-voltage switching (ZVS) or zero-current switching (ZCS) soft switching, is generally used to reduce the switching loss and increase the switching frequency.

However, the phase-shift full-bridge circuit soft switching in the conventional art easily has the problem of duty cycle loss due to current commutation lag, thus affecting the overall efficiency of soft switching.

### Summary

The embodiments of the present disclosure provide a full-bridge circuit and a full-bridge converter, which can solve at least the problem in the related art that the overall efficiency of full-bridge circuit soft switching is poor.

According to one aspect of the embodiments of the present disclosure, a full-bridge circuit is provided. The full-bridge circuit comprises: a primary bridge circuit, a transformer, and a secondary rectifier circuit, wherein the primary bridge circuit comprises a first primary bridge circuit and a second primary bridge circuit connected in parallel, and an auxiliary inductor is connected between a lagging arm of the first primary bridge circuit and a lagging arm of the second primary bridge circuit.

In some exemplary embodiments, there is a phase shift of 180 degrees between control for the first primary bridge circuit and control for the second primary bridge circuit.

In some exemplary embodiments, the transformer comprises two reverse primary windings and one secondary winding, voltage output ends of the first primary bridge circuit and the second primary bridge circuit are respectively connected to the two reverse primary windings of the transformer, and the secondary winding of the transformer is connected to the secondary rectifier circuit.

In some exemplary embodiments, the transformer comprises two reverse primary windings and two secondary windings, voltage output ends of the first primary bridge circuit and the second primary bridge circuit are respectively connected to the two reverse primary windings of the transformer, the secondary rectifier circuit comprises a first secondary rectifier circuit and a second secondary rectifier circuit connected in parallel, the two secondary windings of the transformer are respectively connected to the first secondary rectifier circuit and the second secondary rectifier circuit, each of the first secondary rectifier circuit and the second secondary rectifier circuit is connected in series to a switch tube for synchronous rectification, and the first secondary rectifier circuit and the second secondary rectifier circuit are further connected to an output inductor and an output capacitor.

In some exemplary embodiments, the transformer comprises two reverse primary windings and two secondary windings, voltage output ends of the first primary bridge circuit and the second primary bridge circuit are respectively connected to the two reverse primary windings of the transformer, the secondary rectifier circuit comprises a first secondary rectifier circuit and a second secondary rectifier circuit connected in parallel, the two secondary windings of the transformer are respectively connected to the first secondary rectifier circuit and the second secondary rectifier circuit, each of the first secondary rectifier circuit and the second secondary rectifier circuit is connected in series to a switch tube for synchronous rectification, the first secondary rectifier circuit and the second secondary rectifier circuit are further connected to an output capacitor, and the output capacitor directly clamps the switch tube for synchronous rectification.

In some exemplary embodiments, the transformer comprises a first transformer and a second transformer, a voltage output end of the first primary bridge circuit is connected to a primary winding of the first transformer, a voltage output end of the second primary bridge circuit is connected to a primary winding of the second transformer, the secondary rectifier circuit comprises a first secondary rectifier circuit and a second secondary rectifier circuit connected in parallel, and secondary windings of the first transformer and the second transformer are respectively connected to the first secondary rectifier circuit and the second secondary rectifier circuit.

In some exemplary embodiments, a blocking capacitor is further connected between the lagging arm of the first primary bridge circuit and the lagging arm of the second primary bridge circuit.

According to another aspect of the embodiments of the present disclosure, a full-bridge converter is provided. The full-bridge converter comprises the full-bridge circuit in the foregoing embodiments.

In the foregoing embodiments of the present disclosure, connecting an auxiliary inductor, the current of which is not affected by the size of a load, between two parallel full-bridge circuits can realize soft switching of a lagging arm under a relatively small inductance, and the current commutation speed is accelerated by reducing the magnitude of inductance, so as to solve the problem of duty cycle loss.

### Brief Description of the Drawings

The accompanying drawings described herein are used to provide a deeper understanding of the present disclosure, and constitute a part of the present application. The exemplary embodiments of the present disclosure and the description thereof are used to explain the present disclosure. The drawings and the exemplary embodiment do not constitute limitations to the present disclosure. In the drawings:
Fig. 1 is a schematic diagram of a phase-shift full-bridge circuit according to the related art;
Fig. 2 is a schematic diagram of a phase-shift full-bridge circuit for realizing soft switching according to the related art;
Fig. 3 is a schematic diagram of a full-bridge circuit according to Embodiment 1 of the present disclosure;
Fig. 4 is a schematic diagram showing operation waveforms according to Embodiment 1 of the present disclosure;
Fig. 5 is a schematic diagram showing waveforms of soft switching according to Embodiment 1 of the present disclosure;
Fig. 6 is a schematic diagram of a full-bridge circuit having one transformer according to Embodiment 2 of the present disclosure;
Fig. 7 is a schematic diagram of a full-bridge circuit having one secondary winding in the transformer according to Embodiment 3 of the present disclosure;
Fig. 8 is a schematic diagram of a full-bridge circuit having an active clamp on a secondary side according to Embodiment 4 of the present disclosure;
Fig. 9 is a schematic diagram showing waveforms of an operation principle of an active clamp structure according to Embodiment 4 of the present disclosure;
Fig. 10 is a schematic diagram of a full-bridge having a blocking capacitor for preventing saturation of an auxiliary inductor according to Embodiment 5 of the present disclosure; and
Fig. 11 is a schematic diagram of a full-bridge converter structure according to an embodiment of the present disclosure.

### Detailed Description of the Embodiments

The present disclosure is described below in detail with reference to the drawings and in conjunction with the embodiments. It is to be noted that embodiments in the present application and characteristics in the embodiments may be combined to derive other embodiments not explicitly described.

It is to be noted that the terms "first", "second" and the like in the specification, the claims and the drawings of the present disclosure are used to distinguish similar objects, and are not used to describe a specific sequence or a precedence order.

In the related art, phase-shift full-bridge circuit soft switching, for example, zero-voltage switching (ZVS) or zero-current switching (ZCS) soft switching, is generally used to reduce the switching loss and increase the switching frequency.

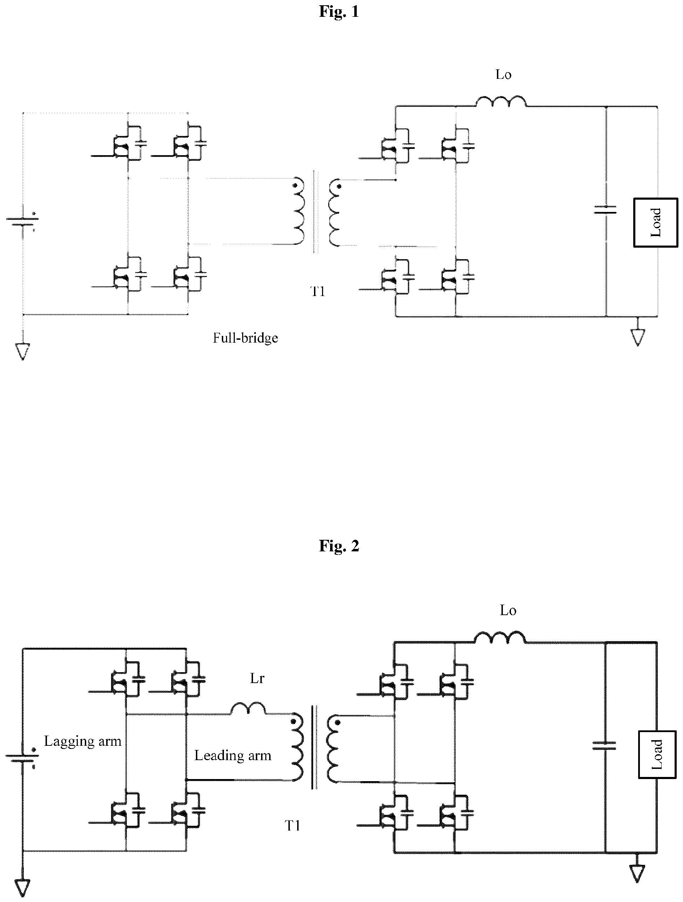

Fig. 1 shows a phase-shift full-bridge circuit in the related art, which is an isolated DC/DC switching conversion circuit realized by using a full-bridge structure. An input voltage is converted by means of a primary full-bridge circuit into a high-frequency alternating-current switching voltage, which is isolated and coupled to a secondary side by means of a transformer, and then an isolated output direct-current voltage is obtained by means of a rectifier circuit and an output filter circuit. The full-bridge circuit is a common option for a high-efficiency and high-power density converter due to a high utilization rate of power switch and transformer. However, this circuit is generally controlled by means of hard switching, that is, a power switch is turned on at a relatively high Vds, and there is a relatively large voltage-current overlapping loss and energy loss of a parasitic output capacitor, thereby limiting further increasing of the switching frequency and the conversion efficiency.

Fig. 2 shows a phase-shift full-bridge circuit for realizing soft switching in the related art, which is a common circuit scheme for realizing zero-voltage switching (ZVS) soft switching on the basis of the circuit shown in Fig. 1. By adding an inductor Lr at the primary full-bridge output, discharging of a parasitic output capacitor when the power switch is turned off is realized by means of freewheeling of the inductor current, thereby realizing zero-voltage switching. However, this circuit has the problems of small inductor current under a light load, poor soft switching effect of a lagging arm, and duty cycle loss caused by a large voltage due to current commutation lag when the inductance is large, and therefore it is difficult to implement an optimized design of the overall efficiency.

For this purpose, the embodiments of the present disclosure provide a dual-path full-bridge circuit, which can solve at least the technical problems existing in the phase-shift full-bridge circuit in the related art above.

### Embodiment 1

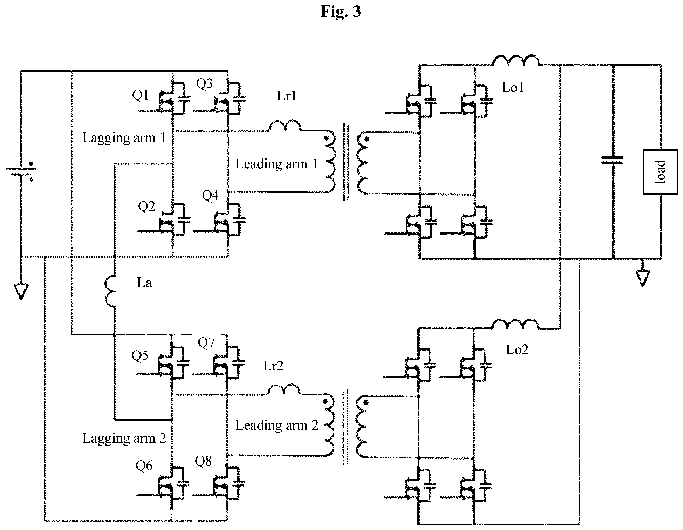

As shown in Fig. 3, a main circuit in the embodiment of the present disclosure is a parallel structure of dual-path full-bridge circuit. As shown in the figure, Lr1 and Lr2 are primary inductors of a conventional phase-shift full-bridge circuit for realizing soft switching. In actual operation, when Q1 and Q2 are turned on, the inductor Lr1 is charged, and when a leading arm composed of Q3 and Q4 is turned off (Q4 is turned off), an output parasitic capacitor of Q3 and Q4 is discharged by a current of the inductor Lr1, so that Vds of Q3 approaches 0, realizing zero-voltage switching of Q3. As in a dead time after the leading arm is turned off, the current of Lr1 is clamped by a current of an output inductor Io, and the output inductance is generally large, the leading arm usually has enough energy to realize zero-voltage switching (ZVS). When a lagging arm composed of Q1 and Q2 is turned off (Q1 is turned off), the current of Lr1 is commutated from Io to -Io, the output inductor current is in a freewheeling state, and the energy for realizing soft switching of the lagging arm in the dead time is determined by the magnitude of the inductor Lr1 and Io. Therefore, in order to realize soft switching of the lagging arm under a light load, a relatively large Lr1 is required, but a larger Lr1 may cause lower current commutation, so that after the commutation of the full-bridge output voltage is completed, the commutation of the output current has not been completed, thus the output voltage of the secondary side of the transformer remains 0, causing duty cycle loss and decrease of the energy transfer efficiency, further causing decrease of the overall efficiency.

The above are problems of conventional phase-shift full-bridge circuits. As shown in Fig. 3, in the embodiment of the present disclosure, an auxiliary inductor La is connected between a lagging arm 1 and a lagging arm 2 of two parallel phase-shift full-bridges.

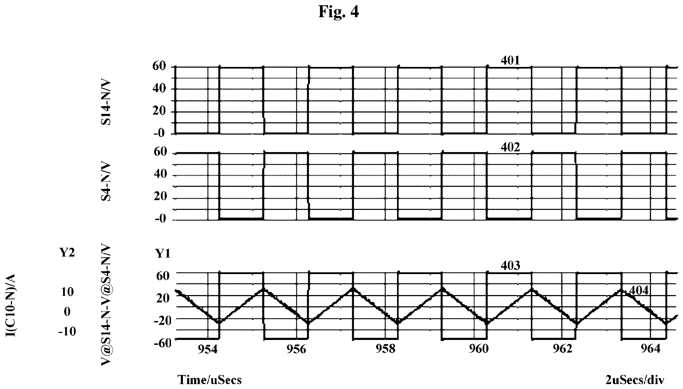

In the embodiment of the present disclosure, there is a phase shift of 180 degrees between the controls (control signals) for the two full-bridge circuits, that is, the drive and voltage signals of the lagging arm 1 and the lagging arm 2 are in a complementary relationship, and reference may be made to Fig. 4 for a specific schematic diagram of waveforms. As shown in Fig. 4, 401 is a voltage waveform of the lagging arm 1, 402 is a voltage waveform of the lagging arm 2, 403 is a voltage waveform across the auxiliary inductor La, and 404 is a current waveform of the auxiliary inductor La. Therefore, in the embodiment of the present disclosure, the soft switching of the lagging arm realizes a current of the auxiliary inductor La in addition to a current of the primary inductor Lr1 of a conventional phase-shift full-bridge. As shown in Figs. 3 and 4, in this connection manner, as reflected in the formula ILa = Vin/(4fs^{∗}La), the current of the auxiliary inductor La is not affected by the size of an output load. Therefore, in the embodiment of the present disclosure, the soft switching of the lagging arm will not be affected by the size of an output load, and a relatively small primary inductor can be used to realize a relatively fast current commutation speed, thereby reducing energy backflow and solving the problem of duty cycle loss, and improving the overall efficiency. In addition, in the embodiment of the present disclosure, the primary inductors Lr1 and Lr2 of the full-bridge circuit may be as small as several tens of nH level, which can be realized by means of a parasitic leakage inductance of a transformer of a conventional hard-switching full-bridge, and an independent inductor device is not necessarily required.

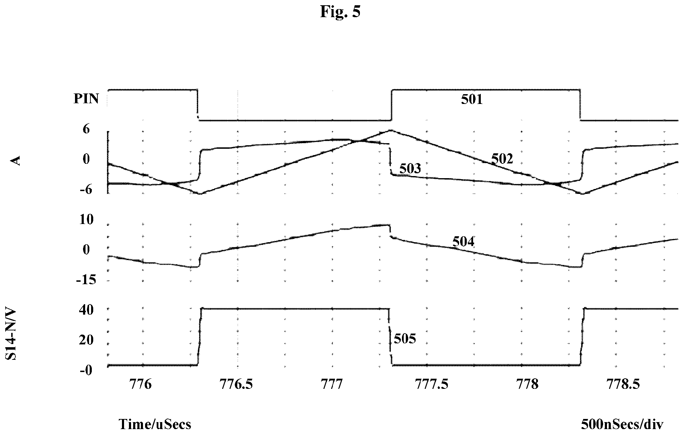

Fig. 5 is a schematic diagram showing specific operation waveforms for realizing soft switching of a lagging arm according to an embodiment of the present disclosure. As shown in Fig. 5, 501 is a drive signal of the lagging arm Q2, 502 is a current waveform of the auxiliary inductor La, 503 is a current waveform of the primary inductor Lr1 under a light load, 504 is a node current flowing out of the lagging arm 1, and 505 is a voltage waveform of the lagging arm 1, i.e., Vds waveform of Q2. From Fig. 5, it can be determined that the primary inductor Lr1 of the full-bridge circuit is relatively small, and in a case of fast commutation of the current ILr1, by means of the auxiliary inductor current 502, it can be ensured that the node current 504 flowing out of the lagging arm 1 is greater than 0 in the dead time after both Q1 and Q2 of the lagging arm 1 are turned off, the node voltage 505 of the lagging arm 1 is enabled to be lowered to 0 in the dead time, and it is ensured that Q2 Vds is 0 when Q2 driving signal 501 is high, realizing zero-voltage switching of Q2, thereby reducing the switching loss. Likewise, when the current ILr1 is commutated from negative to positive, by means of the negative current of the auxiliary inductor current 502, it can be ensured that the node current flowing into the lagging arm 1 is positive, and the node voltage is charged to Vin in the dead time before Q1 is turned on, so that Vds of Q1 is 0, realizing zero-voltage switching of Q1. In addition, as described above, in the embodiment of the present disclosure, as there is a phase shift of 180 degrees between the control signals of the parallel dual-path full-bridges, the switching states of the lagging arm 1 and the lagging arm 2 are complementary, and two ends of the current of the auxiliary inductor La connecting the lagging arm 1 and the lagging arm 2 are exactly in an inflow and outflow complementary relationship, a control process similar to that in Fig. 5 can realize soft switching of switches Q5 and Q6 of the lagging arm 2.

### Embodiment 2

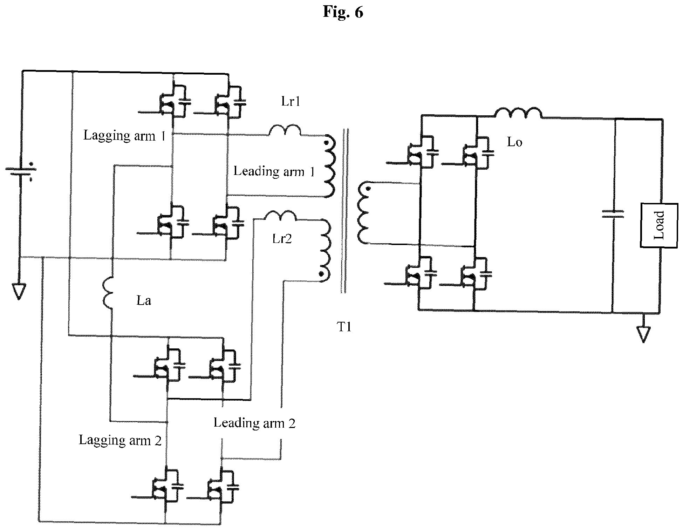

As shown in Fig. 6, the dual-path full-bridge circuit in Embodiment 2 is implemented by making improvements on the basis of Fig. 3 using a transformer. As in the embodiment of the present disclosure, there is a phase shift of 180 degrees in the control of the dual-path full-bridge circuit, and output voltages of the two full-bridges are exactly reversed, the two full-bridges may be connected to two reverse primary windings of one transformer respectively, that is, the same transformer and magnetic core may be used for implementation. Meanwhile, in the present embodiment, as shown in Fig. 6, the rectifier circuit and the output inductor at the secondary side may also be simplified as one circuit. Therefore, the present embodiment is a preferred embodiment of a high-efficiency and high-power density power supply. It should be noted that, in the present embodiment, other control methods and flows are the same as those in the Embodiment 1 above, and are not further described herein.

### Embodiment 3

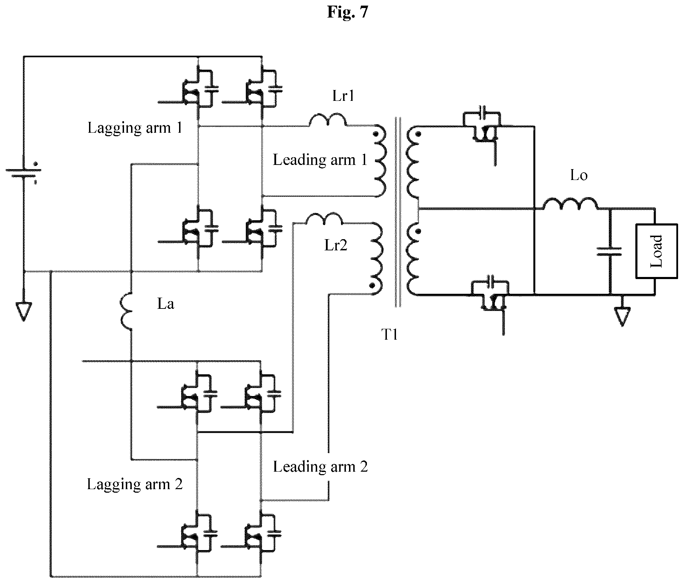

As shown in Fig. 7, different from the foregoing embodiment, in Embodiment 3, the secondary side of the transformer uses a dual-winding synchronous rectification circuit. Compared with Embodiment 2 shown in Fig. 6, the secondary synchronous rectification in the present embodiment may be implemented by means of two switch tubes, and therefore the number of devices may be further reduced in certain application scenarios, thus reducing the costs. It should be noted that, in the present embodiment, other control methods and flows are the same as those in the foregoing embodiment, and are not further described herein.

### Embodiment 4

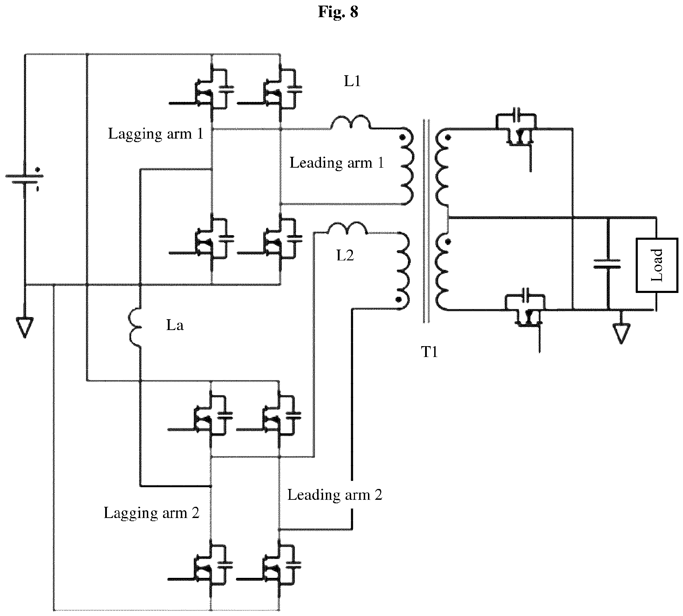

As shown in Fig. 8, Embodiment 4 is an application of an auxiliary inductor structure in a dual-active clamp full-bridge circuit. Compared with the full-bridge circuit in other embodiments, the full-bridge circuit in the present embodiment has no output inductor in the secondary rectifier circuit, and a synchronous rectifier tube may be directly clamped by an output capacitor. Therefore, in the present embodiment, voltage stress of the secondary synchronous rectifier tube may be further reduced, and a switch tube with lower voltage resistance may be used. It should be noted that, in the present embodiment, other control methods and flows are the same as those in the foregoing embodiment, and are not further described herein.

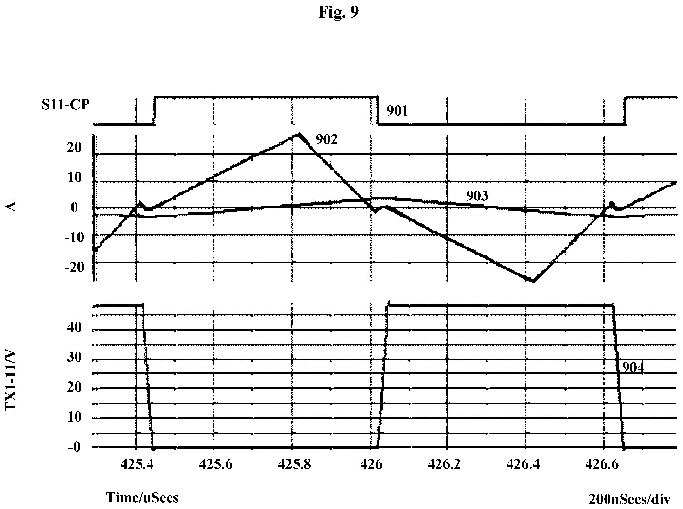

Fig. 9 shows waveforms of an operation principle of the full-bridge circuit according to Embodiment 4 shown in Fig. 8. As shown in Fig. 9, it can be observed that when the lagging arm is switched, the inductor current approaches 0. Although the inductor of this circuit is much larger than Lr1 in the circuit as shown in Fig. 4, because the lagging arm of the circuit is switched when the inductor current approaches 0, a longer dead time is required in order to realize soft switching, which greatly affects the transfer efficiency and the equivalent duty cycle. In Fig. 9, 901 is a drive signal of a switch tube of the lagging arm, 902 is a primary inductor current, 903 is a current of the auxiliary inductor La, and 904 is a bridge arm voltage of the lagging arm. It can be determined that, when the primary inductor current approaches 0, the voltage benfam of the lagging arm may be discharged by means of the current of the auxiliary inductor La, so that the voltage of the lagging arm is discharged to 0 before the drive signal is high, thereby realizing zero-voltage switching of the lagging arm.

### Embodiment 5

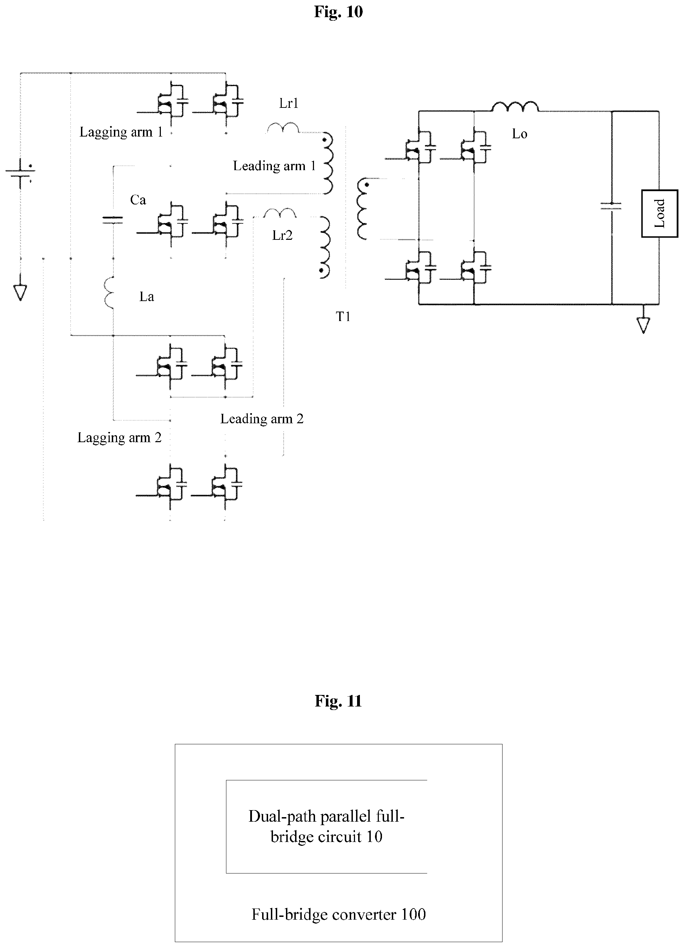

As shown in Fig. 10, in Embodiment 5 of the present disclosure, a blocking capacitor is used for preventing saturation of an auxiliary inductor. In the foregoing embodiment of the present disclosure, the auxiliary inductor is connected to middle points of two complementary lagging arms. Theoretically, the voltage across the auxiliary inductor is an alternating-current square wave signal shown in Fig. 4 and no direct-current component is contained. However, in an actual circuit, due to reasons such as controller asymmetry caused by the duty cycle precision and mismatching of time delays such as a driver, the voltage across the load inductor may have a certain direct-current component, and there is a risk of saturation of the auxiliary inductor. Therefore, in the present embodiment, as shown in Fig. 10, a blocking capacitor Ca is further added between the lagging arms of the two parallel full-bridge circuits, so as to ensure that only an alternating-current component exists across the auxiliary inductor, thereby avoiding inductor current saturation. It can be reasonably understood that, in all the foregoing embodiments of the present disclosure, the risk of current saturation of the auxiliary inductor may be resolved by means of the solution of adding a blocking capacitor Ca.

The embodiments of the present disclosure further provide a full-bridge converter. The full-bridge converter is designed based on the dual-path parallel full-bridge circuit according to the foregoing embodiments of the present disclosure. As shown in Fig. 11, the full-bridge converter 100 comprises a dual-path parallel full-bridge circuit 10. The control method and flow of the full-bridge converter 100 are the same as those of the dual-path parallel full-bridge circuit described in the foregoing embodiments, and therefore are not further described herein.

In the high-efficiency soft-switch full-bridge circuit provided in the foregoing embodiments of the present disclosure, full-input voltage and soft-switch control in a load range can be realized, and the problem of duty cycle loss of a conventional phase-shift full-bridge circuit is avoided, thereby reducing switching loss and conduction loss, improving the overall power supply efficiency.

The foregoing descriptions are merely preferred embodiments of the present disclosure, and are not intended to limit the present disclosure. For those skilled in the art, the present disclosure may have various modifications and variations. Any modifications, equivalent replacements, improvements, etc. made within the spirit and principle of the present disclosure shall be included within the scope of protection of the present disclosure.

## Claims

1. A full-bridge circuit, comprising: a primary bridge circuit, a transformer and a secondary rectifier circuit, wherein the primary bridge circuit comprises a first primary bridge circuit and a second primary bridge circuit connected in parallel, and an auxiliary inductor is connected between a lagging arm of the first primary bridge circuit and a lagging arm of the second primary bridge circuit.

2. The full-bridge circuit according to claim 1, wherein there is a phase shift of 180 degrees between control for the first primary bridge circuit and control for the second primary bridge circuit.

3. The full-bridge circuit according to claim 2, wherein the transformer comprises two reverse primary windings and one secondary winding, voltage output ends of the first primary bridge circuit and the second primary bridge circuit are respectively connected to the two reverse primary windings of the transformer, and the secondary winding of the transformer is connected to the secondary rectifier circuit.

4. The full-bridge circuit according to claim 1, wherein the transformer comprises two reverse primary windings and two secondary windings, voltage output ends of the first primary bridge circuit and the second primary bridge circuit are respectively connected to the two reverse primary windings of the transformer, the secondary rectifier circuit comprises a first secondary rectifier circuit and a second secondary rectifier circuit connected in parallel, the two secondary windings of the transformer are respectively connected to the first secondary rectifier circuit and the second secondary rectifier circuit, each of the first secondary rectifier circuit and the second secondary rectifier circuit is connected in series to a switch tube for synchronous rectification, and the first secondary rectifier circuit and the second secondary rectifier circuit are further connected to an output inductor and an output capacitor.

5. The full-bridge circuit according to claim 1, wherein the transformer comprises two reverse primary windings and two secondary windings, voltage output ends of the first primary bridge circuit and the second primary bridge circuit are respectively connected to the two reverse primary windings of the transformer, the secondary rectifier circuit comprises a first secondary rectifier circuit and a second secondary rectifier circuit connected in parallel, the two secondary windings of the transformer are respectively connected to the first secondary rectifier circuit and the second secondary rectifier circuit, each of the first secondary rectifier circuit and the second secondary rectifier circuit is connected in series to a switch tube for synchronous rectification, the first secondary rectifier circuit and the second secondary rectifier circuit are further connected to an output capacitor, and the output capacitor directly clamps the switch tube for synchronous rectification.

6. The full-bridge circuit according to claim 1, wherein the transformer comprises a first transformer and a second transformer, a voltage output end of the first primary bridge circuit is connected to a primary winding of the first transformer, a voltage output end of the second primary bridge circuit is connected to a primary winding of the second transformer, the secondary rectifier circuit comprises a first secondary rectifier circuit and a second secondary rectifier circuit connected in parallel, and secondary windings of the first transformer and the second transformer are respectively connected to the first secondary rectifier circuit and the second secondary rectifier circuit.

7. The full-bridge circuit according to any one of claims 1-6, wherein a blocking capacitor is further connected between the lagging arm of the first primary bridge circuit and the lagging arm of the second primary bridge circuit.

8. A full-bridge converter, comprising the full-bridge circuit according to any one of claims 1-7.
